Europäisches Patentamt

European Patent Office

Office européen des brevets

(19)

(11) **EP 1 287 922 A1**

(12) **EUROPÄISCHE PATENTANMELDUNG**

(43) Veröffentlichungstag:
05.03.2003 Patentblatt 2003/10

(51) Int Cl.⁷: **B21D 28/22**, H02K 15/02

(21) Anmeldenummer: 01810839.9

(22) Anmeldetag: 30.08.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB Schweiz AG**
**5400 Baden (CH)**

(72) Erfinder:
• **Zaug, Roland**
**5444 Künten (CH)**
• **Sacher, Robert**
**5242 Birr (CH)**

(74) Vertreter: **ABB Patent Attorneys**
**c/o ABB Schweiz AG**
**Brown Boveri Strasse 6**
**5400 Baden (CH)**

(54) **Verfahren und Vorrichtung zum Stanzen von Rotorblechen**

(57)     Bei eimen Verfahren zur Blechbearbeitung mittels Stanzen, insbesondere zur Herstellung von Rotorblechen für rotierende elektrische Maschinen, werden in einen Blechrohling bei jedem von mehreren Stanzhüben mindestens eine Nut (10) und mindestens ein Kreisbogenabschnitt gestanzt und nach jedem Stanzhub der Blechrohling dezüglich einer ersten Drehachse (8) gedreht. Eine Herstellung von Blechen mit unterschiedlichen Blechdurchmessern und Nuttiefen wird dadurch ermöglicht, dass vor dem ersten Stanzhub die erste Drehachse (8) und ein Tangentialstanzstempel (4) so zueinander positioniert werden, dass eine Umfangsschnittkante (4c) des Tangentialstanzstempels (4) sich in einem Abstand von der ersten Drehachse (8) befindet, der einem vorgegebenen Radius der zu stanzenden Rotor- oder Statorbleche entspricht und die Drehachse (8) und ein Nutenstanzstempel (2) so zueinander positioniert werden, dass eine Nutbodenschnittkante (2c) des Nutenstanzstempels (2) sich in einem Abstand von der ersten Drehachse (8) befindet, der einer Differenz aus dem Radius und einer vorgegebenen Nuttiefe entspricht. Weiterhin wird eine Vorrichtung zur Durchführung des verfahrens angegeben.

Fig. 3

EP 1 287 922 A1

**Beschreibung**

**Technisches Gebiet**

Die Erfindung bezieht sich auf das Gebiet der Blechbearbeitung. Sie betrifft ein Verfahren zur Blechbearbeitung mittels Stanzen, insbesondere zur Herstellung von Rotorblechen für rotierende elektrische Maschinen, und eine Vorrichtung zur Durchführung des Verfahrens nach dem Oberbegriff der unabhängigen Patentansprüche.

**Stand der Technik**

Bei der Herstellung rotierender elektrischer Maschinen werden Rotoren und Statoren insbesondere für Wechselstrommaschinen häufig aus einer grossen Anzahl identischer, im wesentlichen planarer, gegeneinander isolierter Bleche zusammengesetzt. Eine derartige Konstruktion minimiert Verluste, die bei Wechselstrommaschinen durch Wirbelstromkomponenten parallel zu einer Drehachse verursacht werden. Rotorbleche sind dabei im wesentlichen kreisförmig, wobei entlang eines Umfangs Nuten ausgebildet sind, die einer Aufnahme von Rotorwicklungen dienen.

Neben Art und Anzahl der Wicklungen sowie einer Breite eines Luftspaltes zwischen Rotor und Stator haben Parameter der Nuten wie Form, Abmessungen und Tiefe entscheidenden Einfluss auf verschiedene Aspekte des Betriebsverhaltens von Wechselstrommaschinen, wie z.B. Anlaufverhalten und Drehmomentverlauf. Eine geeignete Wahl dieser Parameter erlaubt es, eine Wechselstrommaschine für einen bestimmten Einsatzbereich zu optimieren. Eine wichtige Rolle spielen dabei sogenannte Streustege. Darunter versteht man Ausformungen einer oder beider seitlicher Wände der Nuten an deren offenem Ende, welche die Nut teilweise verschliessen. Eine radiale Ausdehnung dieser Ausformungen bezeichnet man als Streusteghöhe.

Zur Herstellung der einzelnen Bleche aus Blechrohlingen sind verschiedene Verfahren bekannt. Dabei existieren zunächst Verfahren mit mehreren Arbeitsschritten. So kann beispielsweise in einem ersten Arbeitsschritt aus einem Blechrohling eine Kreisform ausgeschnitten werden, anschliessend können in einem zweiten Arbeitsschritt in eines der beiden so entstandenen Werkstücke Nuten gestanzt werden, um ein Rotor- oder Statorblech zu erhalten. Auch eine umgekehrte Vorgehensweise ist möglich. In beiden Fällen werden insgesamt zwei Arbeitsschritte zur Herstellung eines Bleches aus einem Rohling benötigt.

Bei einem anderen Verfahren zur Herstellung von Blechen für rotierende elektrische Maschinen werden Nuten und Kreisform in einem Arbeitsschritt erstellt, wobei die Kreisform ebenfalls gestanzt wird. Im einfachsten Fall wird dabei ein Stanzstempel verwendet, dessen Form exakt einem Negativ des herzustellenden Rotor- oder Statorblechs entspricht. Zwar ist ein derartiges, auch als Komplettschnitt bezeichnetes Verfahren effizient für eine Herstellung grosser Stückzahlen, jedoch sind die benötigten Stanzstempel teuer und es kann nur eine einzige Blechform hergestellt werden.

Bei weiteren Verfahren zur Herstellung von Blechen für rotierende elektrische Maschinen, die im Folgenden unter der Bezeichnung Hackschnitt zusammengefasst werden, wird bei einem Stanzhub einer Stanzmaschine eine Nut und ein Stück der Kreisform gestanzt, anschliessend wird das Werkstück um einen von einer vorgegebenen Anzahl der Nuten abhängigen Betrag gedreht und schliesslich eine weitere Nut und ein weiteres Stück des Kreisumfangs gestanzt, bis schliesslich der komplette Rotor oder Stator fertiggestellt ist. Wie in DE 3841926 ausgeführt, werden dabei häufig Nutenstanzstempel mit einer seitlich angebrachten Trennschneide verwendet, wobei die Länge der Trennschneide dem vorgegebenen Abstand zwischen zwei Nuten entspricht. Problematisch bei solchen Ausführungen ist, dass die jeweils zuletzt gestanzten Nuten grosse Abweichungen von einer vorgesehenen Lage aufweisen können und dass darüber hinaus an sämtlichen Trennstellen Verformungen auftreten können.

In DE 3841926 wird zur Überwindung der vorstehend genannten Probleme eine Vorrichtung vorgestellt, die Lageabweichungen und Blechverformungen zu minimieren gestattet. Dabei werden vorzugsweise zwei Stanzstempel verwendet, die um eine grössere ungerade Anzahl von halben Nutabständen gegeneinander versetzt angeordnet sind. Dabei dient ein erster Stanzstempel als Nutenstanzstempel und ein zweiter Stanzstempel zum Stanzen eines Kreisbogenabschnittes im selben Stanzhub. Die Länge einer Schnittkante des zweiten Stanzstempels entspricht dabei einem Abstand zwischen zwei Nuten. Nuttiefe und Nutabstand sind somit durch die Form der beiden Stempel fix vorgegeben.

Um kostengünstig kleinere und mittlere Stückzahlen von Maschinen herzustellen, die für einen bestimmten Einsatzbereich optimiert sind, ist es wichtig, über flexible Herstellungsverfahren und -werkzeuge für Bleche zu verfügen, bei denen nicht nur der Blechradius, sondern auch Nuttiefe, Nutabstand und vorzugsweise auch Nutform variiert werden können, ohne dass ein Austausch von Stanzstempeln erforderlich ist.

**Darstellung der Erfindung**

Der vorliegenden Erfindung liegt die Aufgabe zugrunde, ein Verfahren zur Blechbearbeitung mittels Stanzen, insbesondere zur Herstellung von Rotorblechen für rotierende elektrische Maschinen, zu ermöglichen, bei welchem in jeweils einem Arbeitsgang Bleche mit verschiedenen Durchmesser, Nutenzahlen und Nuttiefen gefertigt werden können, ohne dass ein Austausch von Stanzstempeln erforderlich ist. Ferner ist eine Vorrichtung anzugeben, mit welcher das Verfahren besonders einfach durchgeführt werden kann.

Diese Aufgaben werden durch ein Verfahren und eine Vorrichtung zur Blechbearbeitung mittels Stanzen gemäss Anspruch 1 bzw. Anspruch 4 gelöst. Weitere vorteilhafte Ausgestaltungen der Erfindung sind in den abhängigen Ansprüchen angegeben.

Beim erfindungsgemässen Verfahren werden ein Nutenstanzstempel zum Stanzen eines Stabaufnahmelochs und eines Streuspaltes und ein Tangentialstanzstempel zum Stanzen eines Kreisbogenabschnitts verwendet. Der Nutenstanzstempel und eine erste Drehachse, um welche ein Blechrohling während der Herstellung schrittweise verdreht wird, werden so zueinander positioniert, dass eine Nutbodenschnittkante des Nutenstanzstempels sich in einem ersten Abstand von der ersten Drehachse befindet, der einer Differenz aus dem Radius und einer vorgegebenen Nuttiefe entspricht. Ausserdem werden der Tangentialstanzstempel und die erste Drehachse so zueinander positioniert, dass sich eine Umfangsschnittkante des Tangentialstanzstempels in einem zweiten Abstand von der ersten Drehachse befindet, der einem vorgegebenen Radius der zu stanzenden Bleche entspricht. Auf diese Weise können Bleche mit verschiedenen Durchmessern und Streusteghöhen mit nur jeweils einem Nutenstanzstempel und einem Tangentialstanzstempel gefertigt werden.

Die erfindungsgemässe Vorrichtung zur Durchführung des erfindungsgemässen Verfahrens sieht einen Nutenstanzstempel vor, der Lochschnittkanten zum Stanzen eines Stabaufnahmelochs und Spaltschnittkanten zum Stanzen eines Streuspaltes aufweist. Dies ermöglicht die Herstellung von Rotorblechen mit Streustegen aus Blechrohlingen in einem Arbeitsgang.

In einer vorteilhaften Weiterbildung der Erfindung ist eine Länge der Spaltschnittkanten zum Stanzen des Streuspaltes grösser als eine unter Verwendung der Vorrichtung stanzbare maximale Streusteghöhe.

In einer vorzugsgemässen Weiterbildung der Erfindung ist eine Länge der Umfangsschnittkante zum Stanzen des Umfangsabschnitts grösser als ein unter Verwendung der Vorrichtung stanzbarer maximaler Nutenabstand.

Diese und weitere Aufgaben, Vorteile und Merkmale der Erfindung werden aus der nachfolgenden, detaillierten Beschreibung eines bevorzugten Ausführungsbeispiels der Erfindung in Verbindung mit den Zeichnungen offensichtlich.

### Kurze Beschreibung der Figuren

Es zeigen schematisch:

Fig. 1 ein Rotorblech mit Nuten mit Streustegen,

Fig. 2 eine einzelne Nut aus Fig. 1 in vergrösserter Darstellung,

Fig. 3 eine Ausführungsform der erfindungsgemässen Vorrichtung zum Herstellung von Rotorblechen mittels Stanzen,

Fig. 4 die Vorrichtung aus Fig. 3 mit den relevanten Massangaben,

Fig. 5 einen Nutenstanzstempel aus Fig. 3 in vergrösserter Darstellung und

Fig. 6 einen Tangentialstanzstempel aus Fig. 3 in vergrösserter Darstellung.

Die in der Zeichnung verwendeten Bezugszeichen und deren Bedeutung sind in der Bezugszeichenliste zusammengefasst. Grundsätzlich sind gleiche Teile mit gleichen Bezugszeichen versehen.

### Wege zur Ausführung der Erfindung

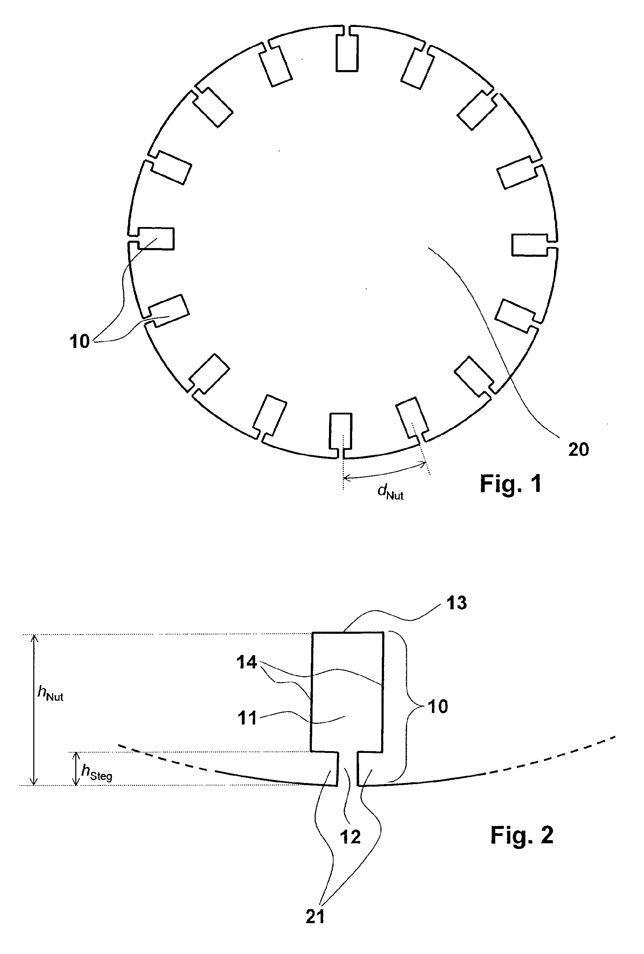

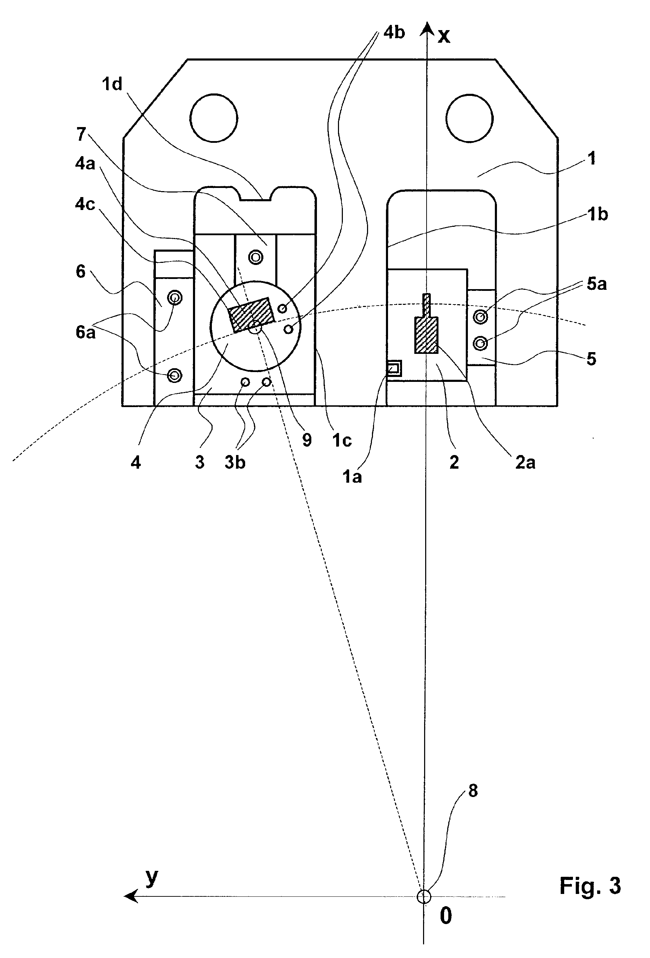

Fig. 1 zeigt schematisch ein Beispiel eines Rotorbleches 20 mit Streustegen 21, welches gemäss einem erfindungsgemässen Verfahren nach Anspruch 1 insbesondere unter Verwendung einer Vorrichtung nach Anspruch 4 hergestellt werden kann. Wie bereits im Stand der Technik beschrieben, weist das Blech entlang eines Umfangs in gleichbleibenden Abständen $d_{Nut}$ Nuten 10 auf. Eine einzelne Nut 10 ist in Fig. 2 vergrössert dargestellt. Die Nuten 10 umfassen ein Stabaufnahmeloch 11, welches der Aufnahme von Wicklungen dient, welche im Allgemeinen von Stäben gebildet werden. Die Nuten 10 umfassen ausserdem einen Streuspalt 12, welcher von Ausformungen seitlicher Wände 14 der Nuten 10 begrenzt wird. Diese Ausformungen bilden den sogenannten Streusteg 21. Eine radiale Ausdehnung $h_{Steg}$ des Streusteges 21 wird als Streusteghöhe bezeichnet, die gesamte radiale Ausdehnung der Nuten 10 $h_{Nut}$ als Nuttiefe. Eine Innenseite der Nuten 10 bildet einen sogenannten Nutboden 13.

In Fig. 3 ist schematisch ein Ausführungsbeispiel einer erfindungsgemässen Vorrichtung zur Herstellung von Rotorblechen mittels Stanzen gezeigt. Auf einem Werkzeugträger 1 sind ein Nutenstanzstempel 2 und ein Tangentialstanzstempel 4 montiert. Die Vorrichtung umfasst weiter eine Blechaufnahmeeinheit, welche der Übersichtlichkeit halber in der Fig. 3 nicht gezeigt ist. In der Blechaufnahmeeinheit ist ein Blechrohling einspannbar und schrittweise um eine erste Drehachse 8, die senkrecht zur Zeichenebene gerichtet ist, drehbar. Die erste Drehachse 8 und der Werkzeugträger 1 sind in der *x-y*-Ebene zueinander verschiebbar.

Die Position des Nutenstanzstempels 2 ist durch einen ersten Positionsstift 1a am Werkzeugträger 1 und eine entsprechende Einkerbung des Nutenstanzstempels 2 in *x*-Richtung eindeutig vorgegeben. In *y*-Richtung ist der Nutenstanzstempel 2 zwischen einer ersten Führungsfläche 1b des Werkzeugträgers 1 und einem Nutenstanzstempel-Festspanner 5 mittels erster Festspannschrauben 5a fixierbar. Vorzugsweise ist der Tangentialstanzstempel 4 in einer kegelförmigen Aussparung eines Aufnehmers 3 um eine zweite Drehachse 9, welche senkrecht zur x-y-Ebene gerichtet ist, drehbar gelagert. In x-Richtung ist der Aufnehmer 3 verschiebbar und mittels eines Aufnehmer-Festspanners 6 mit zweiten Festspannschrauben 6a arretierbar. Ein Tangentialstanzstempel-Festspanner 7 mit einer dritten Festspannschraube 7a erlaubt eine Arretierung in einer gewünschten Winkellage. Die Position des Aufnehmers 3 ist in y-Richtung durch eine zweite Führungsfläche 1c fest vorgegeben.

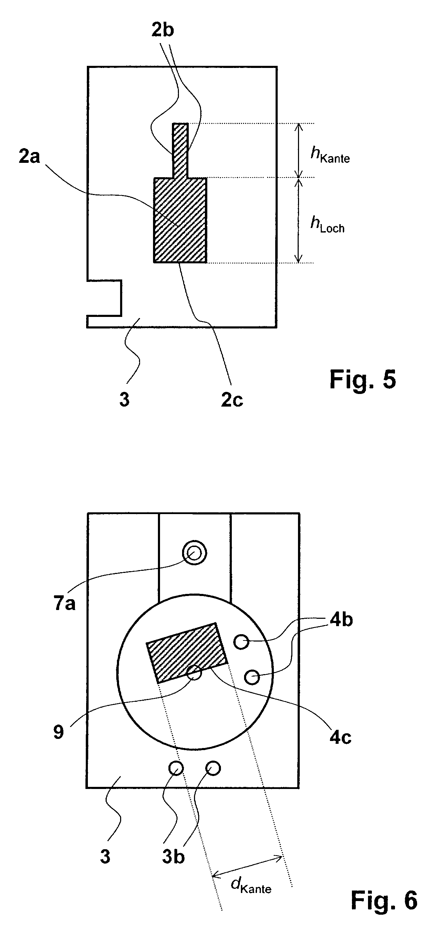

Fig. 5 zeigt eine vergrösserte Darstellung des Nutenstanzstempels 2. Der Nutenstanzstempels 2 weist eine Nutenstanzform 2a auf, welche seitliche Schnittkanten aufweist. Dabei dienen Spaltschnittkanten 2b zum Stanzen eines Streuspaltes 12.

In einer bevorzugten Ausgestaltung der erfindungsgemässen Vorrichtung ist eine erste Länge $h_{Kante}$ der Spaltschnittkanten 2b grösser als eine von der Vorrichtung maximal stanzbare Streusteghöhe $h_{max}$.

In einer weiteren bevorzugten Ausgestaltung der erfindungsgemässen Vorrichtung ist die Nutenstanzform 2a des Nutenstanzstempels 2a symmetrisch bezüglich einer ersten Symmetrieachse.

Fig. 6 zeigt eine vergrösserte Darstellung des Tangentialstanzstempels 4. Der Tangentialstanzstempels 4 weist eine Tangentialstanzform 4a auf, welche mindestens eine Umfangsschnittkante 4c aufweist. Vorzugsweise ist die Tangentialstanzform 4a so ausgebildet, dass ein Mittelpunkt der Umfangsschnittkante 4c auf der zweiten Drehachse 9 zu liegen kommt. Bei einer geraden Umfangsschnittkante 4c wird dies beispielsweise dadurch erreicht, dass der Schnittpunkt aus Umfangsschnittkante 4c und zweiter Drehachse 9 die Umfangsschnittkante 4c in zwei gleich lange Hälften teilt. Vorzugsweise ist die Umfangsschnittkante 4c achsensymmetrisch bezüglich einer zweiten Symmetrieachse.

In einer weiteren bevorzugten Ausgestaltung der erfindungsgemässen Vorrichtung weist die Umfangsschnittkante 4c eine Krümmung auf. Vorzugsweise ist die Umfangsschnittkante 4c gleichmässig gekrümmt. In diesem Fall existiert ein konstanter Krümmungsradius $r_{Kante}$, ein eindeutiger Krümmungsmittelpunkt und die Umfangsschnittkante 4c ist achsensymmetrisch. Vorzugsweise ist der konstante Krümmungsradius $r_{Kante}$ grösser oder mindestens annähernd gleich einem von der Vorrichtung stanzbaren maximalen Blechradius $r_{max}$.

In einer bevorzugten Ausgestaltung der erfindungsgemässen Vorrichtung ist eine zweite Länge $d_{Kante}$ der Umfangsschnittkante 4c grösser gewählt als ein von der Vorrichtung maximal stanzbarer Nutenabstand $d_{max}$.

Eine bevorzugte Ausgestaltung der erfindungsgemässen Vorrichtung weist weitere Nutenstanzstempel und/oder Tangentialstanzstempel auf, so dass bei einem Stanzhub mehr als eine Nut und/oder mehr als ein Kreisbogenabschnitt stanzbar sind.

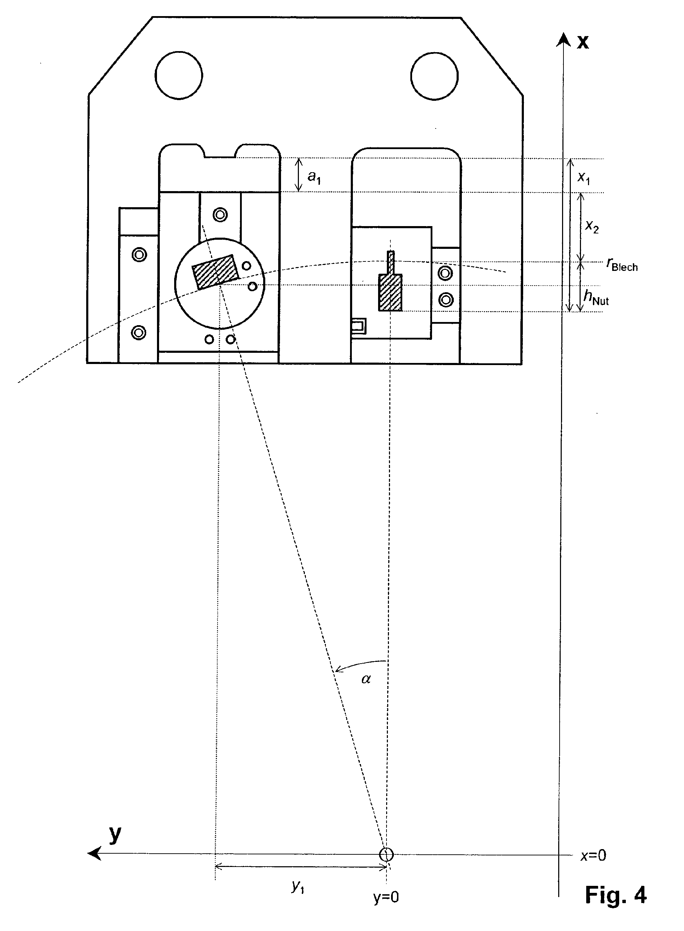

Bei der Herstellung von Rotorblechen sind für einen Blechradius $r_{Blech}$ ein Wert $r_0$ und für eine Nuttiefe $h_{Nut}$ ein Wert $h_0$ vorgegeben. Beim erfindungsgemässen Verfahren werden der Nutenstanzstempel 2 und die erste Drehachse 8 vor einem ersten Stanzhub so zueinander positioniert, dass sich die erste Drehachse 8 in einem ersten Abstand $r_0 - h_0$ von einer Nutbodenschnittkante 2c des Nutenstanzstempels 2 befindet. Weiterhin werden die erste Drehachse 8, um welche ein Blechrohling nach jedem Stanzhub schrittweise verdreht wird, und der Tangentialstanzstempel 4 so zueinander positioniert, dass sich die erste Drehachse 8 in einem zweiten Abstand $r_0$ von der Umfangsschnittkante 4c befindet, wie in Fig. 4 zu sehen ist. Vorzugsweise wird eine Tangentialstanzform 4a verwendet, bei welcher der Mittelpunkt der Umfangsschnittkante 4c auf der zweiten Drehachse 9 liegt. Die Positionerung erfolgt in diesem Fall dadurch, dass zwischen der ersten Drehachse 8 und der zweiten Drehachse 9 der zweite Abstand $r_0$ eingestellt wird.

In einer bevorzugten Variante des erfindungsgemässen Verfahrens wird eine Nutenstanzform 2a verwendet, welche eine erste Symmetrieachse aufweist. Die erste Drehachse 8 wird in einem ersten Abstand $r_0 - h_0$ von der Nutbodenschnittkante 2c auf der ersten Symmetrieachse der Nutenstanzform 2a positioniert. Anschliessend wird der Tangentialstanzstempel 4 so positioniert, dass sich die erste Drehachse 8 im zweiten Abstand $r_0$ von der zweiten Drehachse 9 befindet.

In einer bevorzugten Variante des erfindungsgemässen Verfahrens wird ein Tangentialstanzstempel 4 verwendet, dessen Umfangsschnittkante 4c eine zweite Symmetrieachse aufweist. Der Aufnehmer 3 wird dabei so positioniert, dass sich die erste Drehachse 8 im zweiten Abstand $r_0$ von der zweiten Drehachse 9 befindet. Anschliessend wird der Tangentialstanzstempel 4 in eine solche Stellung gedreht, dass die erste Symmetrieachse des Nutenstanzstempels 2 mit der zweiten Symmetrieachse des Tangentialstanzstempels 4 einen Winkel $\alpha$ mit $\alpha = \arcsin(y_1/r)$ bildet, wobei $y_1$ einen dritten Abstand zwischen der ersten Symmetrieachse der Nutenstanzform 2a und der zweiten Drehachse 9 bezeichnet. Der Winkel $\alpha$ kann vorteilhafterweise mittels eines Winkeltransporteurs eingestellt werden, welcher an zweite Positionsstifte 3b und dritte Positionsstifte 4b angesetzt wird. Ein vierter Abstand $a_1$ zwischen dritter Führungsfläche 1d und Aufnehmer 3 ist anschliessend so einzustellen, dass

$$a_1 = x_1 - h_0 - x_2 + r_0 - \sqrt{(r_0^2 - y_1^2)}$$

gilt, wobei $x_1$ und $x_2$ durch die Vorrichtung vorgegebene Grössen sind, die in Fig. 4 dargestellt sind.

Mit einer erfindungsgemässen Vorrichtung können vorteilhaft mehrere Bleche gleichzeitig in der Blechaufnahmeeinheit eingespannt und so gleichzeitig

gestanzt werden.

## Bezugszeichenliste

1 Werkzeugträger
1a Erster Positionsstift
1b Erste Führungsfläche
1c Zweite Führungsfläche
1d Dritte Führungsfläche
2 Nutenstanzstempel
2a Nutenstanzform des Nutenstanzstempels
2b Spaltschnittkanten
2c Nutbodenschnittkante
3 Aufnehmer
3b Zweite Positionsstifte
4 Tangentialstanzstempel
4a Tangentialstanzform des Tangentialstanzstempels
4b Dritte Positionsstifte
4c Umfangsschnittkante
5 Nutenstanzstempel-Festspanner
5a Erste Festspannschrauben
6 Festspanner für Aufnehmer
6a Zweite Festspannschrauben
7 Tangentialstanzstempel-Festspanner
7a Dritte Festspannschraube
8 Erste Drehachse
9 Zweite Drehachse
10 Nut
11 Stabaufnahmeloch
12 Streuspalt
13 Nutboden
14 Nutwände
20 Rotorblech
21 Streusteg

## Patentansprüche

1. Verfahren zur Blechbearbeitung mittels Stanzen, insbesondere zur Herstellung von Rotorblechen für rotierende elektrische Maschinen,

   - wobei in einen Blechrohling bei jedem von mehreren Stanzhüben mindestens eine Nut (10) und mindestens ein Kreisbogenabschnitt gestanzt wird und

   - nach jedem Stanzhub der Blechrohling bezüglich einer ersten Drehachse (8) gedreht wird,

   **dadurch gekennzeichnet, dass**

   - vor dem ersten Stanzhub die erste Drehachse (8) und ein Nutenstanzstempel (2) derart zueinander positioniert werden, dass eine Nutbodenschnittkante (2c) des Nutenstanzstempels (2) sich in einem ersten Abstand von der ersten Drehachse (8) befindet, der einer Differenz aus einem vorgegebenen Radius und einer vorgegebenen Nuttiefe entspricht und dass

   - vor dem ersten Stanzhub die erste Drehachse (8) und ein Tangentialstanzstempel (4) derart zueinander positioniert werden, dass eine Umfangsschnittkante (4c) des Tangentialstanzstempels (4) sich in einem zweiten Abstand von der ersten Drehachse (8) befindet, der dem vorgegebenen Radius entspricht.

2. Verfahren nach Anspruch 1, **dadurch gekennzeichnet, dass**

   - ein Nutenstanzstempel verwendet wird, der eine bezüglich einer ersten Symmetrieachse symmetrische Nutenstanzform (2a) aufweist und

   - die erste Drehachse (8) und der Nutenstanzstempel (2) derart zueinander positioniert werden, dass ein Schnittpunkt aus erster Drehachse (8) und erster Symmetrieachse gebildet wird.

3. Verfahren nach Anspruch 1 oder 2, **dadurch gekennzeichnet, dass**

   - ein Tangentialstanzstempel (4) verwendet wird, der eine bezüglich einer zweiten Symmetrieachse symmetrische Tangentialstanzform (4a) aufweist und

   - die erste Drehachse (8) und der Tangentialstanzstempel (4) derart zueinander positioniert werden, dass ein Schnittpunkt aus erster Drehachse (8) und zweiter Symmetrieachse gebildet wird.

4. Verfahren nach einem der vorangehenden Ansprüche, **dadurch gekennzeichnet, dass**

   - bei jedem Stanzhub mehrere Blechrohlinge gleichzeitig gestanzt werden.

5. Vorrichtung zum Stanzen von Rotorblechen für rotierende elektrische Maschinen, aus Blechrohlingen, umfassend

   - eine Blechaufnahmeeinheit, in welcher mindestens ein Blechrohling einspannbar und schrittweise um eine erste Drehachse (8) drehbar ist,

   - einen Werkzeugträger (1),

- einen auf dem Werkzeugträger (1) positionierbaren Nutenstanzstempel (2),

- einen auf dem Werkzeugträger positionierbaren Tangentialstanzstempel (4), der mindestens eine Umfangsschnittkante (4c) aufweist,

  **dadurch gekennzeichnet, dass**

- der Nutenstanzstempel (2) Spaltschnittkanten (2b) zum Stanzen eines Streuspaltes (12) aufweist.

6. Stanzvorrichtung nach Anspruch 5, **dadurch gekennzeichnet, dass**

- die Spaltschnittkanten (2b) eine erste Länge ($h_{Kante}$) zum Stanzen des Streuspaltes (12) aufweisen, die grösser ist als eine von der Vorrichtung stanzbare maximale Streusteghöhe ($h_{max}$).

7. Stanzvorrichtung nach Anspruch 5 oder 6, **dadurch gekennzeichnet, dass**

- die Umfangsschnittkante (4c) eine zweite Länge ($d_{Kante}$) zum Stanzen des Kreisbogenabschnittes aufweist, die grösser ist als ein von der Vorrichtung stanzbarer maximaler Nutenabstand ($d_{max}$).

8. Stanzvorrichtung nach einem der Ansprüche 5 bis 7, **dadurch gekennzeichnet, dass**

- die Nutenstanzform (2b) des Nutenstanzstempels (2) achsensymmetrisch ist.

9. Stanzvorrichtung nach einem der Ansprüche 5 bis 8, **dadurch gekennzeichnet, dass**

- die Tangentialstanzform (4a) des Tangentialstanzstempels (4) achsensymmetrisch ist.

10. Stanzvorrichtung nach einem der Ansprüche 5 bis 9, **dadurch gekennzeichnet, dass**

- die Umfangsschnittkante (4c) eine konstante Krümmung ($r_{Kante}$) aufweist, die grösser oder im wesentlichen gleich einem von der Vorrichtung stanzbaren maximalen Blechradius ($r_{max}$) ist.

11. Stanzvorrichtung nach einem der Ansprüche 5 bis 10, **dadurch gekennzeichnet, dass**

- der Tangentialstanzstempel (4) auf einem auf dem Werkzeugträger (1) positionierbaren Aufnehmer (3) um eine zweite Drehachse (9) drehbar gelagert ist.

12. Stanzvorrichtung nach Anspruch 11, **dadurch gekennzeichnet, dass**

- ein Mittelpunkt der Umfangsschnittkante (4c) auf der zweiten Drehachse (9) liegt.

13. Stanzvorrichtung nach einem der Ansprüche 5 bis 12, **dadurch gekennzeichnet, dass**

- die Stanzvorrichtung mindestens einen weiteren Tangentialstanzstempel und/oder mindestens einen weiteren Nutenstanzstempel aufweist.

**Fig. 1**

$d_{Nut}$

10

20

**Fig. 2**

13

14

11

10

$h_{Nut}$

$h_{Steg}$

12

21

Fig. 3

**Fig. 4**

**2b**

**2a**

$h_{Kante}$

$h_{Loch}$

**3**

**2c**

# Fig. 5

**7a**

**4b**

**4c**

**9**

**3**

**3b**

$d_{Kante}$

# Fig. 6

**Europäisches Patentamt**

## EUROPÄISCHER RECHERCHENBERICHT

Nummer der Anmeldung

EP 01 81 0839

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | DE 38 41 926 A (ELIN UNION AG) 29. Juni 1989 (1989-06-29) | 1-3 | B21D28/22 H02K15/02 |
| Y | * das ganze Dokument * | 5 | |
| A | | 8,9 | |
| Y | DE 515 304 C (SACHSENWERK LICHT- UND KRAFT-AKT.-GES.) | 5 | |
| A | * das ganze Dokument * | 1-3,8,9 | |
| A | US 4 607 557 A (BERGMANN EWALD ET AL) 26. August 1986 (1986-08-26) * das ganze Dokument * | 13 | |
| A | DE 21 22 424 A (BROWN, BOVERI & CIE) 16. November 1972 (1972-11-16) * Seite 3 * | 11,12 | |
| A | DE 510 798 C (SACHSENWERK LICHT-UND KRAFT-AKT.-GES.) * das ganze Dokument * | | |

RECHERCHIERTE SACHGEBIETE (Int.Cl.7)

B21D
H02K

Der vorliegende Recherchenbericht wurde für alle Patentansprüche erstellt

| Recherchenort | Abschlußdatum der Recherche | Prüfer |
|---|---|---|
| DEN HAAG | 10. Januar 2002 | Ris, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 81 0839

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 3841926 | A | 29-06-1989 | AT | 388520 B | 25-07-1989 |
| | | | AT | 335287 A | 15-12-1988 |
| | | | DE | 3841926 A1 | 29-06-1989 |
| DE 515304 | C | | KEINE | | |
| US 4607557 | A | 26-08-1986 | DE | 2826129 A1 | 20-12-1979 |
| | | | DE | 2916174 A1 | 30-10-1980 |
| | | | BE | 877015 A1 | 01-10-1979 |
| | | | CH | 641982 A5 | 30-03-1984 |
| | | | ES | 481513 A1 | 01-04-1980 |
| | | | FR | 2428484 A1 | 11-01-1980 |
| | | | GB | 2024689 A ,B | 16-01-1980 |
| | | | IT | 1121364 B | 02-04-1986 |
| | | | JP | 55005195 A | 16-01-1980 |
| | | | SE | 435145 B | 10-09-1984 |
| | | | SE | 7905160 A | 16-12-1979 |
| DE 2122424 | A | 16-11-1972 | DE | 2122424 A1 | 16-11-1972 |
| DE 510798 | C | | KEINE | | |

EPO FORM P0461

Für nähere Einzelheiten zu diesem Anhang : siehe Amtsblatt des Europäischen Patentamts, Nr.12/82